# EUROPEAN PATENT APPLICATION

(11) **EP 1 975 433 A2**
(43) Date of publication of application: **01.10.2008**
(21) Application number: 08005824.1
(22) Date of filing: 27.03.2008
(51) Int. Cl.: F16C 33/66

(54) **Rolling bearing**

(30) Priority: 28.03.2007 JP 2007084817
(71) Applicant: JTEKT Corporation, Osaka-shi Osaka 542-8502 (JP)
(72) Inventor: Otsuka, Katsunori, Osaka-shi Osaka 542-8502 (JP)
(74) Representative: Schaeberle, Steffen

(57) **Abstract**

In the ball bearing, in a space surrounded by an inner ring, an outer ring and sealingportions, adsorbingmaterial coatings formed on outer periphery surfaces of the inner ring, adsorbing material coatings formed on inner periphery surfaces of the outer ring, and adsorbing material coatings formed on inside surfaces of the sealing portions and adsorbing material coatings formed on a non-holding surface of the cage are disposed. The adsorption material coatings may adsorb the wear powder generated from the inner ring, the outer ring, the ball, the cage and the sealing portions and the outgas due to vaporization of the lubricant oil.

## Description

### BACKGROUND OF THE INVENTION

### 1. Field of the Invention

The invention relates to a rolling bearing.

### 2. Related Art

In recent years, in units such as a semiconductor producing unit, a liquid crystal producing unit and a hard disk producing unit as an example of a usage environment of rolling bearings, a circuit line width becomes finer and finer, and, in order to improve the yield, dust generation and outgassing from the unit itself are demanded to reduce.

In this connection, in order to reduce the dust generation and outgassing from the bearings, a rolling bearing that adopts, in place of ordinary grease or oil as a lubricant, a lubricant oil having low vapor pressure has been proposed (JP 2006-97882A) .

Now, as the usage environment of the rollingbearings, recently, demands for lower dust generation and lower outgassing are becoming higher, that is, further lower dust generation and outgassing (such as class 10 or more) are demanded to satisfy.

However, by depending on only the low dust generation characteristics and low outgassing characteristics of a lubricant per se, it is difficult to respond to increasing demand for lower dust generation and lower outgassing.

### SUMMARY OF THE INVENTION

In this connection, the invention intends to provide a rolling bearing capable of responding to a higher level of demand for lower dust generation and lower outgassing.

In order to overcome the problems, a rolling bearing of the invention includes an inner ring; an outer ring; a rolling element; and a hermetically sealed portion for hermetically sealing a space between the inner ring and the outer ring, an adsorbing material being disposed partially in a space surrounded by the inner ring, the outer ring and the hermetically sealed portion.

According to the rolling bearing of the invention, an adsorbing material disposed partially in a space surrounded by an inner ring, an outer ring and a hermetically sealed portion adsorbs wear powder generated from the inner ring,'outer ring, rolling element, cage and hermetically sealed portion and an outgas caused by vaporization of a lubricant. Accordingly, the invention may respond to a higher level of demand for lower dust generation and lower outgassing more than ever. Furthermore, according to the invention, even when an amount of the lubricant is increased and there by an amount of vaporized lubricant is increased, the out gas due to the vaporization of the lubricant is adsorbed by an adsorbing material; accordingly, the outgas is inhibited from leaking outside of the bearing. Accordingly, when an amount of the lubricant is increased, the life time of the bearing may be extended.

According to the rolling bearing of the invention, an adsorbing material disposed partially in a space surrounded by the inner ring, outer ring and hermetically sealed portion adsorbs wear powder generated from the inner ring, outer ring, rolling element, cage and hermetically sealed portion and an outgas caused by vaporization of a lubricant. As the result, according to the invention, at a higher level more than ever, demands for lower dust generation and lower outgassing may be responded.

### BRIEF DESCRIPTION OF THE DRAWINGS

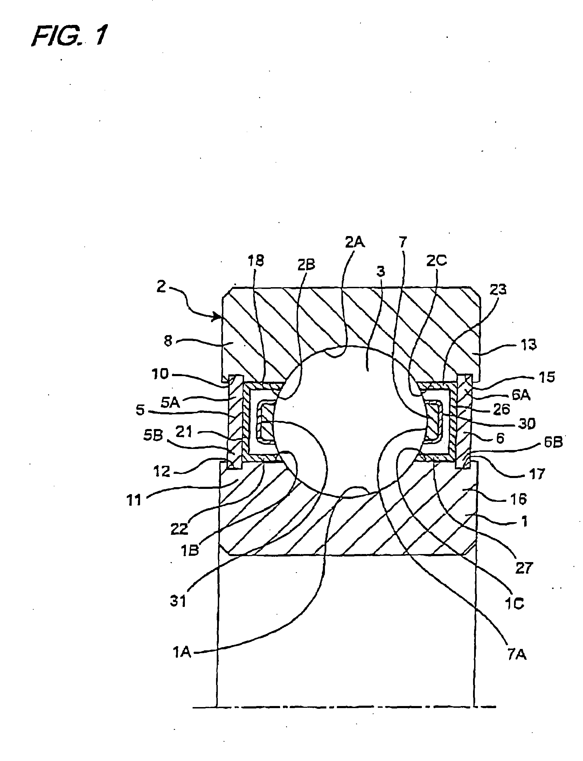

Fig. 1 is a cross-sectional view showing a ball bearing as an embodiment of a rolling bearing of the invention.

### DETAILED DESCRIPTION OF THE PREFERRED EMBODIMENTS

In what follows, the invention will be described in more detail with reference to an embodiment shown in the drawing.

In Fig. 1, a half cross section of a ball bearing as an embodiment of a rolling bearing of the invention is shown. The embodiment includes an inner ring 1 and an outer ring 2, a ball 3 as a rolling element, a cage 7 for holding a ball 3 and annular sealing portions 5 and 6 as a hermetically sealed portion for hermetically sealing a space between the inner ring 1 and the outer ring 2. On a raceway surface 1A of the inner ring 1 of the ball bearing, a raceway surface 2A of the outer ring 2 and the ball 3, a lubricant is coated.

The sealing portion 5 is fixed at one end 5A engaged intimately with an annular groove 10 formed on one shoulder portion 8 in an axial direction of the outer ring 2 and slidably engaged at the other end 5B with an annular groove 12 formed on one shoulder portion 11 in an axial direction of the inner ring 1. On the other hand, the sealing portion 6 is fixed at one end 6A engaged intimately with an annular groove 15 formed on the other shoulder portion 13 in an axial direction of the outer ring 2 and slidably engaged at the other end 6B with an annular groove 17 formed on the other shoulder portion 16 in an axial direction of the inner ring 1. In the embodiment, as an example of the sealed portion, sealingportions 5 and 6 constituted of a core metal and an elastomer seal material that covers the core metal are provided. However, the sealed portion may be a labyrinth seal or a steel seal.

Furthermore, in the embodiment, on an inner periphery surface 2B adjacent to one in an axial direction to a raceway surface 2A of the outer ring 2, an adsorbing material coating 18 made of an adsorbing material is formed. Still furthermore, on an inside surface of a sealing portion 5, an adsorbing material coating 21 made of the adsorbing material is formed. Furthermore, on an outer periphery surface 1B adjacent to one in an axial direction to a raceway surface 1A of the inner ring 1, an adsorbing material coating 22 made of an adsorbing material is formed. The adsorbing material coatings 18, 21 and 22 are connected in string.

Furthermore, in the embodiment, on an inner periphery surface 2C adjacent to the other in an axial direction to a raceway surface 2A of the outer ring 2, an adsorbing material coating 23 made of an adsorbing material is formed. Still furthermore, on an inside surface of a sealing portion 6, an adsorbing material coating 26 made of the adsorbing material is formed. Furthermore, on an inner periphery surface 1C adjacent to the other in an axial direction to a raceway surface 1A of the inner ring 1, an adsorbing material coating 27 made of an adsorbing material is formed. The adsorbing material coatings 23, 26 and27 are connected in string. On the raceway surface 1A of the inner ring 1 and the raceway surface 2A of the outer ring 2, an adsorbing material coating is not formed.

Furthermore, in the embodiment, on a non-holding surface adjacent to a holding surface 7A of a cage 7, adsorption material coatings 30 and 31 made of an adsorbing material are formed.

As an adsorbing material that is formed by at least one of the adsorbing material coatings 18 through 31, one that has either one of the chemical adsorption characteristics or physical adsorption characteristics or one that combines the chemical adsorption characteristics and physical adsorption characteristics may be used. Specific examples thereof include activated carbon, silica gel, zeolite, alumina, silica, boria, titania, cepiolite, activated earth, a polymer (such as styrene polymer and styrene-divinylbenzene copolymer), glass, a fluorinated compound, an ion exchanger, graphite and carbon nanotube.

Examples of the zeolites include natural zeolites such as Analcime, Leucite, Sodalite, Faujasite, Chabazite, dehydrated calcium Chabazite, Gmelinite, Natrolite, Mesolite, Scolecite, Thomsonite, Edingtonite, Gonnardite, Harmotome, Phillipsite, Gismondine, Mordenite, Dachiardite, Heulandite, Clinoptilolite, Stilbite, Epistilbite, Brewsterite, Laumontite, Yugawarite, Aquamarine, Iolite, Milarite, Osumilite, Nepheline and Cancrinite; and synthetic zeolites such as zeolite A, zeolite N-A, zeolite X, zeolite Y, zeolite HS, zeolite ZK-5, zeolite B, zeolite Ω, zeolite R, zeolite G, zeolite D, zeolite T, zeolite L, zeolite W and zeolite C.

Furthermore, examples of the activated earths include ones obtained by treating smectite ores (acid earths) such as Montmorillonite, magnesium Montmorillonite, iron Montmorillonits, iron magnesium Montmorillonite, Beidelite; Arminian Beidelite, Nontronite, Arminian Nontronite, Saponite, Arminian Saponite, Hectorite, Sauuconite and Volkonskoite with a mineral acid such as hydrochloric acid and sulfuric acid to elute partially a basic component such as aluminum, magnesium and iron.

Furthermore, examples of the glass materials include silicate glass and phosphate glass. A surface thereof may be covered with a thin film of a metal such as Ti, Au, Al or Cr.

Still furthermore, examples of the fluorinated compounds include- a-tetrafluorinated resin, a tetra-hexafluorinated resin, a PFA resin, a trifluoroethylene resin, a tetrafluoroethylene-ethylene copolymer, a polyvinylidene fluoride resin, a fluorinated vinyl resin, fluorinated graphite and Teflon (registered trade mark).

Examples of the ion exchangers include cation exchange resins such as a phenol sulfonic acid-formaldehyde resin, a phenal-benzaldehyde sulfonic acid resin, a sulfonic acid derivative of styrene-divinylbenzene copolymer, a carboxylic acid resin, a phosphonic acid resin, a phenol resin and a methacrylic acid-divinylbenzene copolymer; and anion exchange resins such as a quaternary ammonium salt type styrene-divinylbenzene copolymer, an aromatic amine resin, a polyethyleneamine resin and a primary amine type resin.

According to a ball bearing of the embodiment, an adsorbing material of the invention is disposed in a space surrounded by an inner ring 1, an outer ring 2 and seal portions 5 and 6. Namely, adsorbing material coatings 22 and 27 (first adsorbing material coatings) formed on outer periphery surfaces 1B and 1C of the inner ring 1, adsorbing material coatings 18 and 23 (second adsorbing material coatings) formed on inner periphery surfaces 2B and 2C of the outer ring 2, and adsorbing material coatings 18 and 23 (third adsorbing material coatings) formed on inside surfaces of the sealing portions 5 and 6 and adsorbing material coatings 30 and 31 (fourth adsorbing material coatings) formed on a non-holding surface of the cage 7 are disposed. The adsorption material coatings 18 through 31 adsorb the wear powder generated from the inner ring 1, the outer ring 2, the ball 3, the cage 7 and the sealing portions 5 and 6 and the outgas due to vaporization of the lubricant oil.

As the result, according to the embodiment, demands for lower dust generation and lower outgassing may be met at a level higher than ever. Furthermore, according to the embodiment, even when an amount of the lubricant is increased and thereby an amount of vaporized lubricant is increased, the outgas due to the vaporization of the lubricant is adsorbed by an adsorbing material; accordingly, the outgas is inhibited from leaking outside of the bearing. Accordingly, when an amount of the lubricant is increased, the life time of the bearing may be extended.

In the embodiment, the adsorbing material coating made of an adsorbing material is formed on all of the outer periphery surfaces 1B and 1C of the inner ring 1, the inner periphery surfaces 2B and 2C of the outer ring 2, the inside surface of the sealing portion 5, the inside surface of the sealing portion 6 and the non-holding surface of the cage 7 . However, the adsorption material coating may be formed on any one or a plurality of the surfaces. Furthermore, the adsorption material coating may be formed partially on the respective surfaces. Still furthermore, although, in the embodiment, as one example of the rolling bearing, a ball bearing was adopted, a cylindrical roller bearing or a conical roller bearing maybe adopted.

## Claims

1. A rolling bearing comprising:
an inner ring;
an outer ring;
a rolling element; and
a hermetically sealed portion for hermetically sealing a space between the inner ring and the outer ring,
wherein an adsorbing material is disposed partially in a space surrounded by the inner ring, the outer ring and the hermetically sealed portion.

2. The rolling bearing according to claim 1, wherein the adsorbing material is disposedon an area other than raceway surfaces and surfaces of the rolling elements within the space.

3. The rolling bearing according to claim 1, wherein the adsorbing material comprises a first adsorbing material coating formed on an outer periphery surface of the inner ring, and a second adsorbing material coating formed on an inner periphery surface of the outer ring, and a third adsorbing material coating formed on an inside surface of the hermetically sealed portion.

4. The rolling bearing according to claim 3, further comprising a cage which holds the rolling element between the inner ring and the outer ring, wherein a fourth adsorbing material coating is formed on a non-holding surface of the cage.
